# EUROPEAN PATENT APPLICATION

(11) **EP 1 008 989 A2**
(43) Date of publication of application: **14.06.2000**
(21) Application number: 99309870.6
(22) Date of filing: 08.12.1999
(51) Int. Cl.: G11B 20/00, G06F 12/14, G06F 1/00

(54) **Method and apparatus for processing information, and recording medium**

(30) Priority: 11.12.1998 JP 35297498; 18.10.1999 JP 29492899
(71) Applicant: SONY CORPORATION, Tokyo 141 (JP)
(72) Inventor: Asano, Tomoyuki, Intellectual Property Dept., Shinagawa-ku, Tokyo 141 (JP); Osawa, Yoshitomo, Intellectual Property Dept., Shinagawa-ku, Tokyo 141 (JP)
(74) Representative: Horner, David Richard

(57) **Abstract**

A technique for updating a master key while maintaining interoperability is provided. An encrypted data memory stores an encrypted master key obtained by encrypting a master key using a device key stored in a device key memory. A master key decoder produces a master key by decoding the encrypted master key stored in the encrypted data memory using the device key stored in the device key memory. From the above-described master key, a master key of an older generation can be produced. More specifically, a master key of an older generation can be produced by applying a predetermined unidirectional function to the former master key.

## Description

### BACKGROUND OF THE INVENTION

The present invention relates to a method and apparatus for processing information, and to a recording medium, for preventing data from being fraudulently copied.

In recent years, recording devices and recording media for recording information in a digital fashion are becoming increasingly popular. These recording devices and recording media are capable of recording and reproducing data such as video data or music data without creating degradation. Therefore, it is possible to make a copy of data a great number of times while maintaining high quality. However, such an advantage can result in a disadvantage for copyright holders, because copyrighted data can be copied fraudulently a great number of times while maintaining high quality and distributed in markets. Thus, there is a need that recording devices and recording media have a capability of preventing copyrighted data from being fraudulently copied.

For example, in the mini disc (MD (trademark)) system, a technique called SCMS (Serial Copy Management System) is employed. In this technique, when music data is transmitted via a digital interface, information is transmitted together with the music data so as to indicate whether the music data is copy free, copy once allowed, or copy prohibited. When a mini disc recorder receives music data via a digital interface, the mini disc recorder detects an SCMS. If the detected SCMS indicates that the music data is copy prohibited, the music data is not recorded on a mini disc. In the case of copy-once-allowed music data, the SCMS is converted to indicate that the music data is copy prohibited, and the converted SCMS is recorded together with the received music data. If the SCMS indicates that the music data is copy free, the SCMS is recorded together with the received music without changing the SCMS.

In the mini disc system, as described above, SCMS is used to protect data having a copyright from being fraudulently copied.

In the art of digital versatile disks (DVDs), a content scramble system is used to protect data having a copyright from being fraudulently copied. In this system, data having a copyright is recorded on a disk after being encrypted, and a decrypting key is given only to licensed recording devices so that only the licensed recording device can decode the encrypted data into plain data. To receive a license, any recording device is required to be designed such that fraudulent copying of data is impossible. Thus, in the DVD system, data having a copyright is protected from being fraudulently copied.

However, in the method employed in the mini disc system, if a recording device which does not obey the standard is produced fraudulently, that is a recording device which does not change a copy-once-allowed SCMS to a copy-prohibited SCMS is produced, then it is impossible to prevent data from being copied by the unauthorized recording device.

On the other hand, although the method employed in the DVD system is effective for ROM (Read Only Memory) type media, the method is not effective for RAM (Random Access Memory) type media which allow a user to record data, because even an unauthorized user, who may not decode encrypted data, can copy all encrypted data recorded on a disk onto a new disk thereby easily producing a disk which can be reproduced by authorized recording devices.

The inventors of the present invention have proposed, as disclosed in Japanese Unexamined Patent Publication No. 11-224461 (Japanese Patent Application No. 10-25310), a technique in which information identifying a particular recording medium (hereinafter referred to as medium identification information) is recorded together with other data on that particular recording medium so that only devices having a license associated with the medium identification information can access the recording medium. In this technique, data is recorded on a recording medium after being encrypted using a secret key (master key) obtained by receiving a license and medium identification information so that any unauthorized device cannot decrypt the encrypted data even if an unauthorized device can read encrypted data. To receive the license, any device has to be limited in operation such that fraudulent copying of data is impossible.

Because an authorized device cannot access medium identification information, and medium identification information is uniquely assigned to respective media, even if an unauthorized device copies encrypted data onto a new medium, such encrypted data recorded on the medium cannot be decrypted into correct data not only by unauthorized devices but also by authorized devices although the encrypted data can be accessed. Thus, fraudulent copying is effectively prevented.

However, in the above-described technique, the secret key (master key) which can be obtained under license has to be common for all devices. This requirement is needed to make it possible for any authorized device to reproduce data which has been recorded on a recording medium by another authorized device (such a requirement is called interoperability).

However, if a certain device is attacked by an attacker, and if a secret key held by that device is exposed, then the secret key for all devices becomes exposed in effect. In this case, not only data which was recorded before the secret key was exposed but also data which was recorded after the secret key was exposed can be encrypted using the exposed secret key.

In view of the above, it is an object of the present invention to provide a technique for reducing the ability for data to be fraudulently copied while maintaining interoperability.

### SUMMARY OF THE INVENTION

According to an aspect of the present invention, there is provided an information processing apparatus comprising acquisition means for acquiring a first key from the outside, the first key being capable of producing a first key of a generation older than the generation of the first key acquired from the outside; and updating means for updating the content of first key storage means storing the first key with the first key acquired via the acquisition means.

In one embodiment, the updating means may update the content of the first key storage means when the generation of the first key acquired via the acquisition means is later than the generation of the first key stored in the first key storage means.

In an alternative embodiment, the updating means may replace the first key stored in the first key storage means with the first key acquired via the acquisition means.

Preferably, the information processing apparatus further includes first key storage means for storing a first key capable of producing a first key of a generation older than the generation of the first key stored in the first key storage means.

The first key storage means may in one embodiment store a first encrypted key obtained by encrypting the first key in accordance to a second key. In this case, the information processing apparatus may further include decoding means for decoding the first encrypted key in accordance with the second key.

The information processing apparatus according to an embodiment of the present invention may further include second key storage means for storing the second key.

The information processing apparatus of an embodiment of the present invention may further include production means for producing, from the first key stored in the first key storage means, a first key of a generation older than the generation of the first key stored in the first key storage means.

The production means may preferably produce a first key of a generation older than the generation of the first key stored in the first key storage means by applying a predetermined function to the first key stored in the first key storage means.

The acquisition means may read the first key from a recording medium on which the first key is recorded.

In the case where a plurality of first keys are recorded on a recording medium, the acquisition means of one embodiment may read a particular first key of the plurality of first keys, the particular first key being assigned to the information processing apparatus.

The information processing apparatus according to an embodiment of the present invention may further include encryption means for encrypting data in accordance with the first key stored in the first key storage means.

Furthermore, the information processing apparatus according to an embodiment of the present invention may further include: comparison means for comparing the generation of the first key stored in the first key storage means with a particular generation of a first key, the particular generation being indicated by generation information recorded on a recording medium; and recording control means for controlling recording of data onto the recording medium in accordance with a comparison result given by the comparison means.

The recording control means may preferably allow data to be recorded on the recording medium, only when the generation of the first key stored in the first key storage means is equal to or later than the generation indicated by the generation information recorded on the recording medium,

The information processing apparatus according to an embodiment of the present invention may further include encryption means for encrypting data in accordance with the first key stored in the first key storage means and outputting the resultant encrypted data. In this case, the recording control means may record the encrypted data onto the recording medium.

Preferably, the recording control means also records, onto the recording medium, the generation information indicating the generation of the first key used by the encryption means to encrypt the data.

The information processing apparatus according to an embodiment of the present invention may further include decoding means for decoding encrypted data in accordance with the first key stored in the first key storage means.

The information processing apparatus may further include: comparison means for comparing the generation of the first key stored in the first key storage means with a particular generation of a first key, the particular generation being indicated by generation information recorded on a recording medium; and reproducing control means for controlling reproducing of data from the recording medium, in accordance with a comparison result given by the comparison means.

The reproducing control means may preferably allow data to be reproduced from the recording medium, only when the generation of the first key stored in the first key storage means is equal to or later than the generation indicated by the generation information recorded on the recording medium.

In the case where encrypted data is recorded on a recording medium, the information processing apparatus may further include decoding means for decoding the encrypted data in accordance with the first key stored in the first key storage means.

The information processing apparatus according to an embodiment of the present invention may further include: first comparison means for comparing the generation of the first key stored in the first key storage means with a generation indicated by first generation information stored on a recording medium on which encrypted data obtained by encrypting data according to a first key and the first generation information indicating the generation of the first key used to encrypt the data are recorded; reproducing control means for controlling reproducing of encrypted data from the recording medium, in accordance with a comparison result given by the first comparison means; and decoding means for decoding the encrypted data in accordance with the first key stored in the first key storage means.

The reproducing control means may preferably allow data to be reproduced from the recording medium, only when the generation of the first key stored in the first key storage means is equal to or later than the generation indicated by the first generation information recorded on the recording medium.

In the case where second generation information indicating the generation of a particular first key has been recorded, in advance, on a recording medium, the information processing apparatus may further include second comparison means for comparing the generation indicated by the second generation information recorded on the recording medium with the generation of the first key stored in the first key storage means. In this case, the reproducing control means may control reproducing of the encrypted data from the recording medium, in accordance with comparison results given by the first and second comparison means.

The information processing apparatus according to an embodiment of the present invention may further include production means for producing a first key in such a manner that, when the generation of the first key stored in the first key storage means is later than a generation indicated by first generation information stored on the recording medium, the production means produces a first key of the generation indicated by the first generation information from the first key stored in the first key storage means. In this case, the decoding means may decode the encrypted data in accordance with the first key produced by the production means.

The information processing apparatus according to an embodiment of the present invention may further include production means for producing, from the first key stored in the first key storage means, a first key of a particular generation indicated by generation information recorded on a recording medium; encrypting means for encrypting data in accordance with the first key produced by the production means and outputting the resultant encrypted data; and recording control means for recording the encrypted data onto the recording medium.

The information processing apparatus may further include: production means for producing, from the first key stored in the first key storage means, a first key of a particular generation indicated by generation information recorded on a recording medium; reproducing control means for reproducing data recorded on the recording medium; and decoding means for decoding the data reproduced from the recording medium, in accordance with the first key produced by the production means.

According to another aspect of the present invention, there is provided an information processing method comprising the steps of: acquiring a key from the outside, the key being capable of producing a key of a generation older than the generation of the key acquired from the outside; and updating the content of key storage means storing the key with the key acquired via the acquisition means.

According to still another aspect of the present invention, there is provided a first recording medium on which a program is recorded, said program including the steps of: acquiring a key from the outside, the key being capable of producing a key of a generation older than the generation of the key acquired from the outside; and updating the content of key storage means storing the key with the key acquired via the acquisition means.

According to still another aspect of the present invention, there is provided a second recording medium on which generation information indicating the generation of a first key used to encrypt data is recorded.

As described above, in the information processing apparatus, the information processing method, and the first recording medium, according to the present invention, a key capable of producing a key of an older generation is acquired from the outside, and the content of key storage means storing a key is updated with the acquired key. This makes it possible to prevent an unauthorized copy of data, while maintaining interoperability.

In the second recording medium according to the present invention, generation information indicating the generation of the first key capable of producing another key of an older generation is stored on the second recording medium, thereby making it possible to prevent an unauthorized copy of data while maintaining interoperability.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a block diagram illustrating an embodiment of a reproducing apparatus according to the present invention;
Fig. 2 is a schematic diagram illustrating data used to update a master key;
Fig. 3 is a flow chart illustrating an operation of updating a master key performed by the reproducing apparatus;
Fig. 4 is a schematic diagram illustrating an operation of decoding a master key performed by the reproducing apparatus;
Fig. 5 is a flow chart illustrating an operation of reproducing information performed by the reproducing apparatus;
Fig. 6 is a block diagram illustrating an embodiment of a recording/reproducing apparatus according to the present invention;
Fig. 7 is a block diagram illustrating an example of the construction of an encrypting/decrypting LSI 36;
Fig. 8 is a schematic diagram illustrating a format of a recording medium 21;
Fig. 9 is a flow chart illustrating a process of updating a master key performed by the recording/reproducing apparatus;
Fig. 10 is a flow chart illustrating a process of recording data performed by the recording/reproducing apparatus;
Fig. 11 is a schematic diagram illustrating a method of recording generation-when-encrypted information;
Fig. 12 is a flow chart illustrating a process of reproducing data performed by the recording/reproducing apparatus; and
Fig. 13 is a block diagram illustrating an embodiment of a computer according to the present invention.

### DESCRIPTION OF THE PREFERRED EMBODIMENT

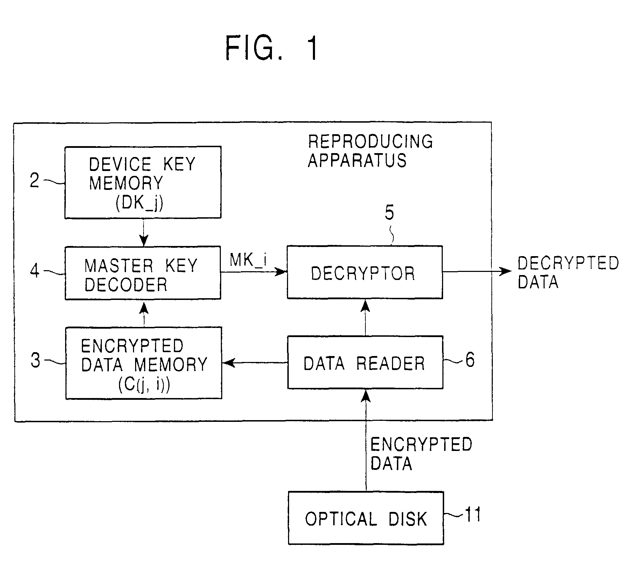

Fig. 1 is a block diagram illustrating an embodiment of a reproducing apparatus according to the present invention. In the reproducing apparatus, a device key memory 2 stores a device key DKⱼ assigned to this reproducing apparatus. An encrypted data memory 3 stores an encrypted master key C(j, i) (obtained by encrypting a master key MKᵢ using the device key DKⱼ). Herein, the relationship among the device key DKⱼ, the master key MKᵢ, and the encrypted master key C(j, i) is represented by C(j, i) = Enc(DKⱼ, MKᵢ).

Subscripts i and j denote the generation number and the category number, respectively. The category number is assigned to a device such as a reproducing apparatus such that each device or each device manufacturer is assigned a particular category number. When it is not necessary to distinguish device keys DKⱼ among those having different category numbers j, they are simply represented as device keys DK. Similarly, when it is not necessary to distinguish master keys MKᵢ among those having different generation numbers i, they are simply represented as master keys MK. Furthermore, an encrypted master key C(j, i) is also represented simply as an encrypted master key C when such a simple representation is allowed.

A device key DK and an encrypted master key C are given to a device by a key-issuing organization and stored in advance in the device. The key-issuing organization holds the master key and also secretly holds devices keys DK in relation to category numbers j.

A master key decoder 4 decodes the encrypted master key C stored in the encrypted data memory 3 using the device key DK stored in the device key memory 2 thereby obtaining a master key MK. More specifically, if a function used to decode encrypted data X using a key Y is represented as Dec(Y, X), the master key decoder 4 performs a calculation according to an equation MKᵢ = Dec(DKⱼ, C(j, i)). The obtained master key MK is supplied to a decrypter 5.

When data, recorded on an optical disk 11 after being encrypted using a master key MK, is read by a data reader 6 and supplied to the decrypter 5, the decrypter 5 decrypts the data using the master key MK supplied from the master key decoder 4. That is, data encrypted in accordance with the master key MK is stored on the optical disk 11, and the decrypter 5 decrypts (decodes) the encrypted data using the master key MK. If the decrypted data is, for example, image data, the decrypted data is output to a display device and displayed thereon. When it is required to update the master key MK, the data reader 6 reads an encrypted master key C encrypted using the device key DK from an optical disk 11 on which data used for updating is recorded, and outputs the obtained encrypted master key C to the encrypted data memory 3.

An operation of updating a master key performed by a reproducing apparatus is described below. Updating of the master key is performed as required, for example, when a master key MKᵢ of a generation i is exposed by an attacker, or performed at fixed intervals. In the following description, it is assumed that the key-issuing organization provides an optical disk on which master keys MKᵢ (encrypted master keys C(j, i)) encrypted using all devices keys assigned to devices are described for use in updating the master key MKᵢ. Of course, encrypted master keys C(j, i) may also be supplied via a recording medium other than optical disks or via a network such as the Internet. It is not necessarily required that the optical disk 11 be dedicated to the purpose of updating the master key MKᵢ, but the optical disk 11 may also store content data such as video data or audio data, or the optical disk 11 may be such a disk which allows content data to be recorded.

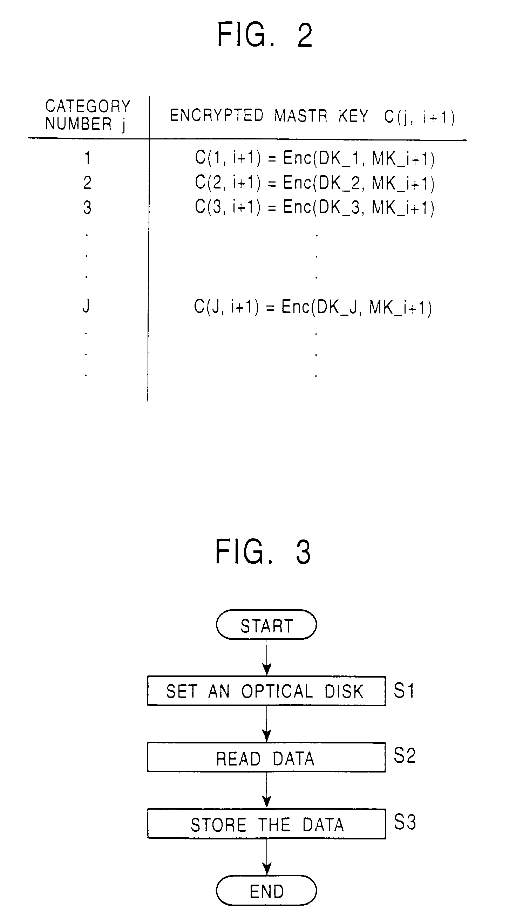

Fig. 2 illustrates an example of a set of encrypted master keys C(j, i) recorded on the optical disk 11. In this example, data is used to update a master key MKᵢ of a generation i to a master key MKᵢ₊₁ of a generation i + 1. More specifically, the optical disk 11 stores category numbers j and encrypted master keys C(j, i + 1) obtained by encrypting a master key MKᵢ₊₁ in accordance with the device key DKᵢ wherein they are recorded in a related fashion.

As can be seen from Fig. 2, the same master key MKᵢ₊₁ is employed for all category numbers j. Employment of the same master key MK for all devices makes it possible for any authorized device having the device key DK to use data encrypted according to the master key MK, that is, interoperability can be achieved. On the other hand, unauthorized devices having no device key cannot obtain the master key by means of decoding and thus cannot decode data which has been encrypted using the master key MK.

For example, it is known that a device having a category number 2 has been attacked by an attacker and its device key DK₂ has been exposed, a field for the encrypted master key C(2, i + 1) corresponding to the category number 2 is blanked, as shown in Fig. 2, so that a master key MKᵢ₊₁ of a new generation is not supplied to the device whose device key DK has been exposed.

Referring now to the flow chart shown in Fig. 3, an operation performed by the reproducing apparatus to update the master key MKᵢ of the generation of i to a master key of a generation of i + 1 is described below. In step S1, an optical disk 11 on which data used to update the master key MK has been stored in the above-described manner is set on the reproducing apparatus. In step S2, the data reader 6 of the reproducing apparatus reads from the optical disk an encrypted master key C(j, i + 1) corresponding to the category number j (the device key DK stored) assigned to the reproducing apparatus. For example, when the category number j is 3, an encrypted master key C(3, i + 1) is read.

After being read in the above-described manner, the encrypted master key C(j, i + 1) is stored in the encrypted data memory 3 in step S3. The encrypted data memory 3 stores only the encrypted master key C(j, i + 1) updated in the above-described manner.

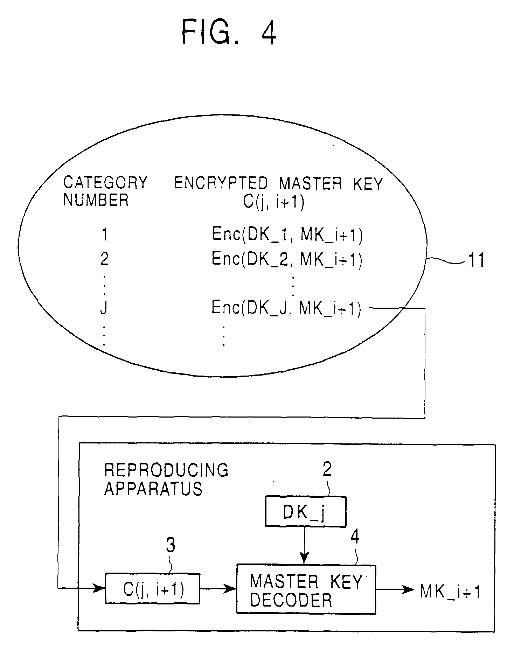

To reproduce data, which has been stored on the optical disk 11 after being encrypted using the master key MK, using the encrypted master key C(j, i + 1) stored in the encrypted data memory 3, the master key decoder 4, as shown in Fig. 4, obtains a master key MKᵢ₊₁ by decoding the encrypted master key C(j, i + 1) stored in the encrypted data memory 3 in accordance with the device key DK stored in the device key memory 2.

The encrypted data stored on the optical disk 11 is then decoded using the obtained master key MKᵢ₊₁.

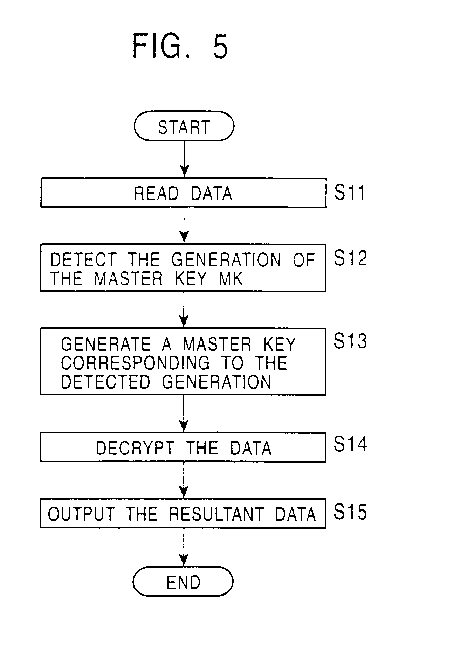

Referring to the flow chart shown in Fig. 5, the reproduction process is described in further detail below. First, in step Sll, the data reader 6 of the reproducing apparatus reads data from the optical disk 11 set on the reproducing apparatus. The optical disk 11 includes a lead-in area and a data area, wherein a TOC (Table Of Contents) representing directory information and a file name of data stored in the data area is stored in the lead-in area. The lead-in area also stores data (generation information) indicating the generation of the master key MK employed to encrypt the data stored in the data area. Because the generation information indicates the generation of the master key MK used to encrypt the data when recording the data, the generation information will also be referred to as generation-when-encrypted information.

In step S11, the data reader 6 read the data stored in the lead-in area, and the process goes to step S12. In step S12, the master key decoder 4 detects the generation i of the master key MK used to encrypt the data stored in the data area from the data which has been read by the data reader 6 and supplied to the master key decoder 4 via the encrypted data memory 3. In the next step S13, the master key decoder 4 produces a master key MKᵢ of the generation of i determined in the previous step.

For example, when the detected generation of the master key MK is the latest generation i + 1, the master key decoder 4 produces a master key MKᵢ₊₁ by decoding the encrypted master key C(j, i + 1) stored in the encrypted data memory 3 using the device key DK stored in the device key memory 2.

On the other hand, when the detected generation of the master key MK is older than the generation of the master key stored in the encrypted data memory 3, the master key decoder 4 produces a master key MK of the detected generation using the encrypted master key C stored in the encrypted data memory 3. That is, the master key decoder 4 first acquires the master key MKᵢ₊₁ by means of decoding as described earlier. The master key decoder 4 then produces the master key MK of the detected generation by applying a unidirectional function f, which is stored in the master key decoder 4, to the master key MKᵢ₊₁ as many times as the difference between the generation of the master key MKᵢ₊₁ and the detected generation.

For example, if the generation of the master key MK stored in the encrypted data memory 3 is i + 1, and if the generation of the master key MK detected in the above-described manner is i -1, then the master key decoder 4 produces a master key MKᵢ₋₁ by applying the unidirectional function f twice, that is, by calculating a function f(f(MKᵢ₊₁)). Similarly, if the generation of the master key MK stored in the encrypted data memory 3 is i + 1, and if the generation of the master key MK detected in the above-described manner is i -2, then the master key decoder 4 produces a master key MKᵢ₋₂ by applying the unidirectional function f three times, that is, by calculating function f(f(f(MKᵢ₊₁))).

Herein, the unidirectional function may be a hash function. More specifically, a hash function according to the MD-5 (Message Digest 5) or the SHA-1 (Secure Hash Algorithm-1) may be employed. The key-issuing organization determines, in advance, master keys MK₁, MK₂,..., MK_{N}, which may be converted to master keys of older generations using the unidirectional function. More specifically, the master key MK_{N} of the Nth generation is first determined, and then older-generation master keys MK_{N-1}, MK_{N-2},..., MK₁, are produced from the master key MK_{N} by iterating application of the unidirectional function. The key-issuing organization issues master keys in the order of generations starting from the master key MK₁ having the smallest generation number (oldest-generation master key). The unidirectional function used to generate a master key of an older generation than that stored in the reproducing apparatus is stored in the master key decoder 4 of all reproducing apparatus.

As for the method of producing master keys, a public-key encryption technique may be employed. In this case, the key-issuing organization holds a secret key according to the public-key encryption technique and gives a public key corresponding to the secret key to all reproducing apparatus. The key-issuing organization determines a first-generation master key MK₁ and issues it. When a second-generation or later-generation master key MKᵢ is required, the key-issuing organization produces a master key MKᵢ by converting a master key MKᵢ₋₁ of an immediately previous generation. Therefore, in this case, the key-issuing organization does not need to generate, in advance, an Nth-generation master key using a unidirectional function. Furthermore, theoretically, it is possible to generate a master key of any generation without limitation.

If the reproducing apparatus has a master key MK of a certain generation, the reproducing apparatus can obtain a master key of an older generation by converting the master key MK using a public key.

As described above, the master key decoder 4 can generate a master key MK of an older generation using an encrypted master key C corresponding to a latest-generation master key MK, and thus the encrypted data memory 3 is required only to store the encrypted master key C corresponding to the latest-generation master key.

After producing (by means of decoding) the master key MK of the detected generation in step S13, the data reader 6, in step S14, reads data from the data area of the optical disk 11. Furthermore, in step S14, the decrypter 5 decrypts (decodes) the data read by the data reader 6, using the master key MK obtained in step S13. If the decrypted data is, for example, image data, then, in the next step S15, the decrypted data is output to the display device and displayed thereon.

In the present embodiment, as descried above, the master key MK capable of producing a master key of an older generation is encrypted using device keys DK assigned to the respective devices and the resultant encrypted master keys are supplied to the respective devices so as to update the master key MK stored in the respective devices. This makes it possible to update the master key MK while maintaining interoperability. It becomes also possible to reject a device having an exposed device key DK. Any device having the master key MK of the latest generation can generate a designated master key using the unidirectional function f, and thus the device needs a less capacity of memory.

In the reproducing apparatus, the master key MK used to decode the data is discarded after completion of the decoding. When the master key MK is required again after that, the master key MK is produced by decoding the encrypted master key C using the device key DK. Therefore, it becomes possible to avoid a reduction in the degree of concealment, which would otherwise occur when a non-encrypted master key MK remains in the reproducing apparatus.

Although in the embodiment described above, the encrypted data memory 3 stores only the encrypted master key C of the updated generation, the encrypted data memory 3 may store encrypted master keys of various generations. In this case, it is not required to calculate a master key MK of a required generation, and thus a less processing capacity is required.

When one of master keys MK₁, MK₂,..., MK_{N} capable of producing master keys of older generations using a unidirectional function is given, it is impossible to generate a master key of a generation later than the generation of the given master key, and thus data is protected from being fraudulently decoded using a new-generation master key MK produced from an old-generation master key MK.

As described above, by updating the master key MK as required, it is possible to protect data encrypted according to the updated master key MK. However, data encrypted using a master key MK of a generation older than the updated generation is not protected.

That is, although the above-described technique of updating master keys may be applied to a recording apparatus which records data after encrypting the data using a master key, when a master key MK is attacked by an attacker and exposed, if the exposed master key is employed by a recording apparatus to record data, then any reproducing apparatus which does not have a new-generation master key but has the exposed master key MK can reproduce data from an optical disk 11. Therefore, if a recording apparatus using an old-generation master key MK, that is a recording apparatus which does not or cannot update its master key MK is used for a long period of time, data is decoded by unauthorized reproducing apparatus to which new-generation master key MK is not given.

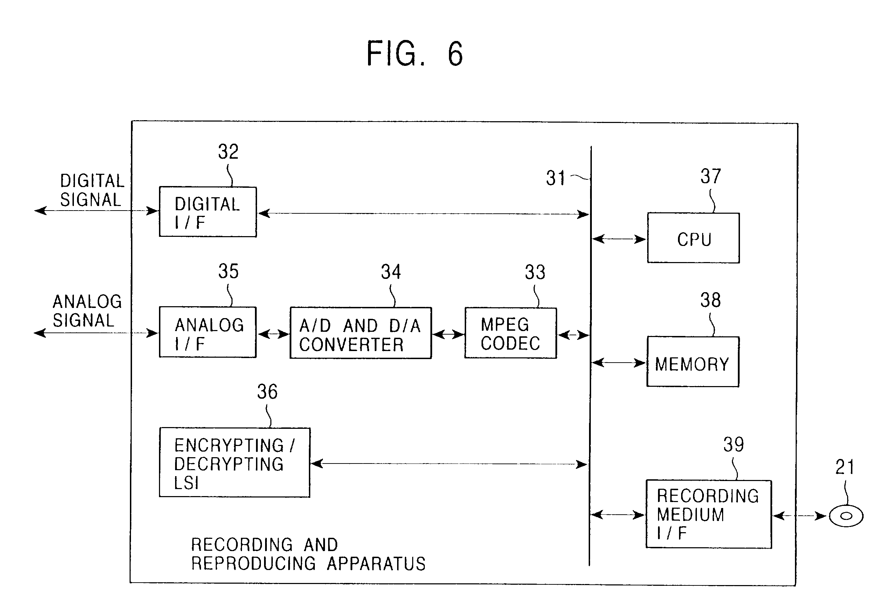

To avoid the above problem, an embodiment of the present invention provides a recording/reproducing apparatus. An example of the construction of the recording/reproducing apparatus is shown in Fig. 6.

Using a bus 31, connections are made among a digital interface 32, an MPEG (Moving Picture Experts Group) codec 33, an encrypting/decrypting LSI (large Scale Integrated Circuit) 36, a CPU (Central Processing Unit) 37, a memory 38, and a recording medium interface 39.

The digital interface 32 receives a content in the form of a digital signal supplied from the outside and outputs the received content over the bus 31. The digital interface 32 also receives a digital signal via the bus 31 and outputs it to the outside. The MPEG codec 33 MPEG-decodes MPEG-coded data supplied via the bus 31 and outputs the resultant data to a converter 34. The MPEG codec 33 also MPEG-encodes a digital signal supplied from the converter 34 and outputs the resultant signal over the bus 31.

The converter 34 converts the MPEG-decoded digital signal received from the MPEG codec 33 into an analog signal and supplies the resultant analog signal to an analog interface 35. The converter 34 also converts an analog signal supplied from the analog interface 35 into a digital signal and supplies the resultant digital signal to the MPEG codec 33. The analog interface 35 receives a content in the form of an analog signal supplied from the outside and outputs the received analog signal to the converter 34. The analog interface 35 also receives an analog signal from the converter 34 and outputs the received analog signal to the outside.

The encrypting/decrypting LSI 36 encrypts or decrypts the content in the form of the digital signal supplied via the bus 31 and outputs the result over the bus 31.

The CPU 37 controls various components such as the MPEG codec 33 and the encrypting/decrypting LSI 36 and performs various processes by executing a program stored in the memory 38. The memory 38 may be a nonvolatile memory and serves to store the program executed by the CPU 37 and data required for operations of the CPU 37. The recording medium interface 39 reads (reproduces) digital data from a recording medium such as an optical disk 21 and outputs the obtained digital data over the bus 31. The recording medium interface 39 also supplies digital data received via the bus 31 to the recording medium 21 so as to record it on the recording medium 21.

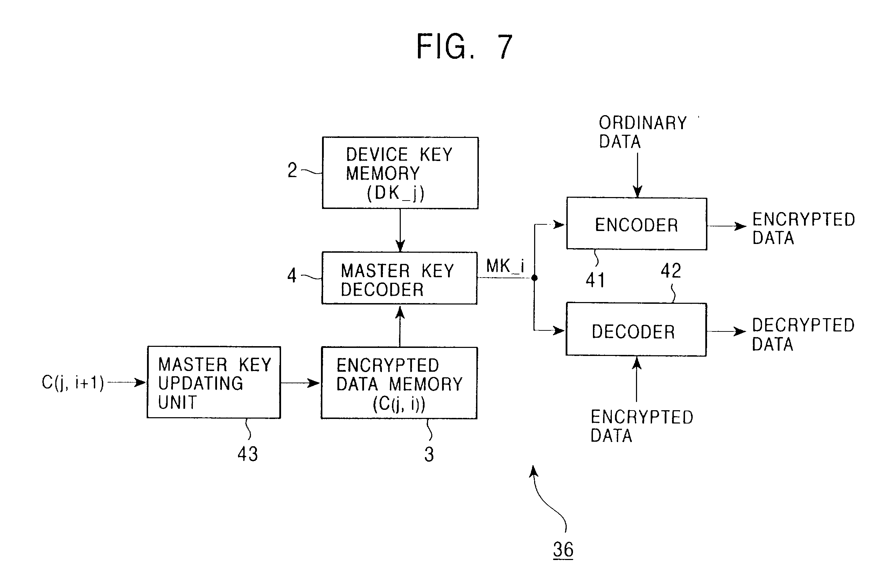

Fig. 7 illustrates an example of the construction of the encrypting/decrypting LSI 36 shown in Fig. 6. In Fig. 7, similar parts to those in the reproducing apparatus shown in Fig. 1 are denoted by similar reference numerals, and they are not described in further detail unless required.

An encoder 41 encrypts a content in an ordinary form (ordinary content) received via the bus 31 in accordance with the master key output from the master key decoder 4 thereby producing encrypted data (encrypted content). The resultant encrypted content is output over the bus 31. A decoder 42 decodes the encrypted content received via the bus 31 in accordance with the master key MK output from the master key decoder 4 thereby converting it to a content in the normal form. The resultant normal content is output over the bus 31.

A master key updating unit 43 controls updating of the master key MK stored in the encrypted data memory 3.

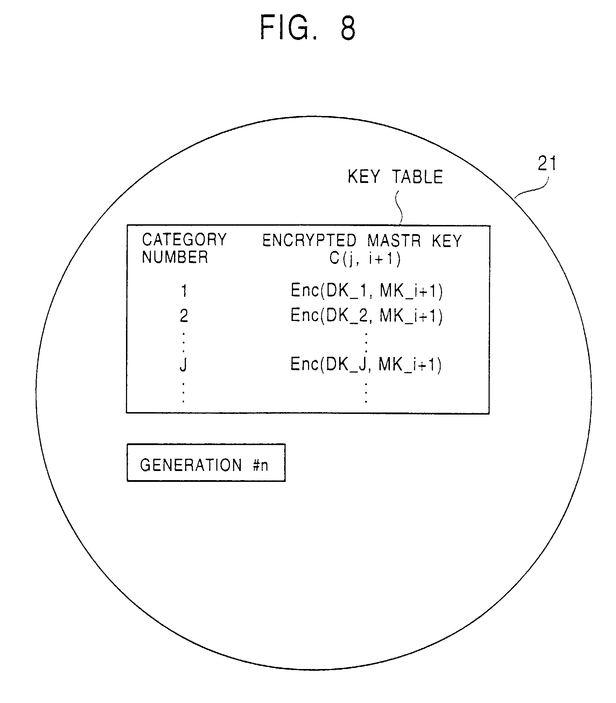

Fig. 8 illustrates the format of the recording medium 21 used by the recording/reproducing apparatus shown in Fig. 6.

The data recorded on the recording medium shown in Fig. 8, as in the example shown in Fig. 2, is used to update a mater key MKᵢ of a generation i into a master key MKᵢ₊₁ of a generation i + 1. On the recording medium 21, as with the optical disk 11 described above, a table is recorded which describes the correspondence between the category numbers j and the encrypted master keys C(j, i + 1) (hereinafter, the table will also be referred to as a key table). The recording medium 21 also stores generation information #n indicating the generation of a master key having a smallest generation number required to record or reproduce data onto or from the recording medium 21. The generation information #n is recorded in advance, for example, when the recording medium 21 is produced. This generation information will also be referred to as prerecorded generation information in order to distinguish it from the generation-when-encrypted information described above.

The key table and the prerecorded generation information #n are stored in a read-only area such as a lead-in area of the recording medium 21 so that the key table and the prerecorded generation information #n are protected from being rewritten fraudulently.

The apparatus is designed such that data can be recorded on the recording medium 21 only when the apparatus has a master key MK of a generation equal to or later than the generation indicated by the prerecorded generation information stored on the recording medium 21. If recording media 21 on which prerecorded generation information #n indicating a particular generation is recorded are widely distributed, then the master keys of recording apparatus for recording data on a recording medium or of recording/reproducing apparatus such as that shown in Fig. 6 capable of reproducing data from a recording medium 21 are updated over a large number of apparatus, and thus the number of apparatus using a master key MK of an old generation decreases. As a result, fraudulent copying of data is prevented.

That is, if an optical disk 11 which does not have prerecorded generation information, a recording apparatus which does not have updated master key can record data on that optical disk 11, and the data recorded on that optical disk 11 can be reproduced by a reproducing apparatus which does not have updated master key, as described above.

In contrast, data is not allowed to be recorded on a recording medium 21 which has prerecorded generation information unless the recording apparatus has a master key MK of a generation equal to or later than that indicated by the prerecorded generation information. That is, to record data on the recording medium 21, a master key MK of a generation equal to or later than that indicated by the prerecorded generation information stored on the recording medium 21. This prevents a recording apparatus, whose master key is not updated, from recording data.

In the present embodiment, it is assumed that the generation of the master key described in the key table recorded on the recording medium 21 is recorded in the form of prerecorded generation information #n. However, it is not necessarily required that the generation of the master key described in the key table recorded on the recording medium 21 be the same as the generation indicated by the prerecorded generation information #n.

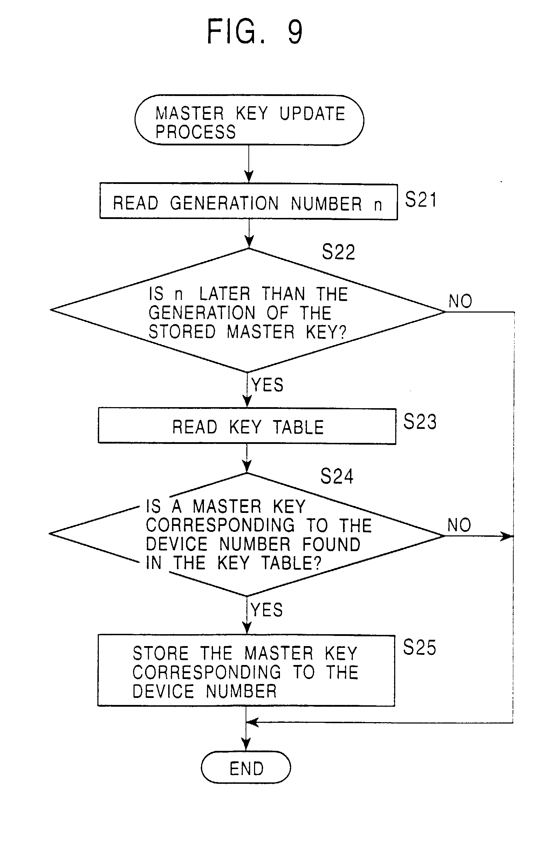

Referring now to Figs. 9 to 12, the operation of the recording/reproducing apparatus shown in Fig. 6 is described below.

Referring first to the flow chart shown in Fig. 9, a master key updating process is described which is performed when the recording medium 21 is set on the recording/reproducing apparatus to record or reproduce data.

In step S21 after the recording medium 21 is set on the recording/reproducing apparatus, the recording medium interface 39 reads prerecorded generation information #n from the recording medium 21 and supplies it to the master key updating unit 43 of the encrypting/decrypting LSI 36 (Fig. 7). In step S22, the master key updating unit 43 reads the encrypted master key C from the encrypted data memory 3 and compares the generation of the encrypted master key with the generation number n indicated by the prerecorded generation information #n so as to examine coincidence/difference in generation.

If it is determined in step S22 that the generation n indicated by the prerecorded generation information #n is not later (not newer) than the generation of the encrypted master key C stored in the encrypted data memory 3, that is, if the generation of the encrypted master key C stored in the encrypted data memory 3 is equal to or later than the generation n indicated by the prerecorded generation information #n, then steps S23 to S25 are skipped and the master key updating process is ended.

In this case, there is no need to update the master key MK (encrypted master key C) stored in the encrypted data memory 3, and thus updating is not performed.

On the other hand, if it is determined in step S22 that the generation n indicated by the prerecorded generation information #n is later (newer) than the generation of the encrypted master key C stored in the encrypted data memory 3, that is, if the generation of the encrypted master key C stored in the encrypted data memory 3 is older than the generation n indicated by the prerecorded generation information #n, the process goes to step S23. In step S23, the recording medium interface 39 reads the key table from the recording medium 21 (Fig. 8) and transfers it to the master key updating unit 43 of the encrypting/decrypting LSI 36 (Fig. 7).

In step S24, the master key updating unit 43 determines whether or not the key table includes the encrypted master key C corresponding to the device number j assigned to the recording/reproducing apparatus. If the encrypted master key C is not found in the key table, step S25 is skipped and the master key updating process is ended.

When it is known that the recording/reproducing apparatus has been attacked by an attacker and its device key DKⱼ has been exposed, the field in the key table for the encrypted master key C(j, i + 1) corresponding to the category number j is blanked as described earlier with reference to Fig. 2, and thus the master key MK is not updated (cannot be updated).

On the other hand, if it is determined in step S34 that the key table includes the encrypted master key corresponding to the device key j assigned to the recording/reproducing apparatus, the process goes to step S25. In step S25, the master key updating unit 43 supplies the encrypted master key C to the encrypted data memory 3 so as to replace the encrypted master key stored therein with the encrypted master key C detected in the key table. Then, the master key updating process is ended.

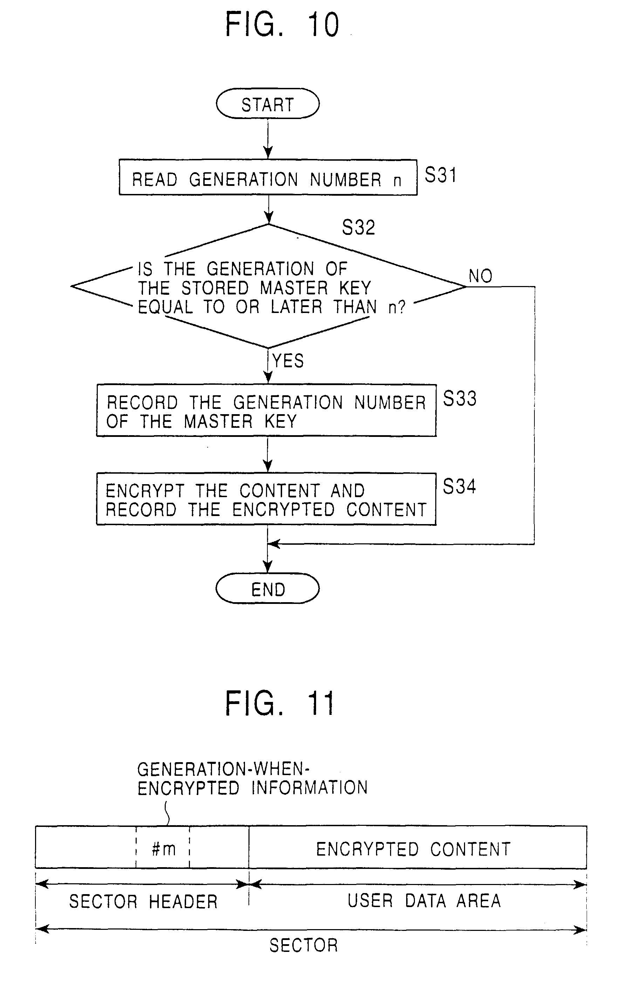

Referring now to the flow chart shown in Fig. 10, an operation performed by the recording/reproducing apparatus to record data on the recording medium 21 is described below.

First, in step S31, the recording medium interface 39 reads the prerecorded generation information #n from the recording medium 21 and supplies it to the CPU 37. In step S32, the CPU examines the generation of the encrypted master key C stored in the encrypted data memory 3 of the encrypting/decrypting LSI (Fig. 7) and determines whether the generation n indicated by the prerecorded generation information #n is equal to or later than the generation of the encrypted master key by means of comparison.

If it is determined in step S32 that the generation of the encrypted master key C stored in the encrypted data memory 3 is neither equal to nor later than the generation n indicated by the prerecorded generation information #n, that is, if it is determined that the generation of the encrypted master key C stored in the encrypted data memory 3 is older than the generation n indicated by the prerecorded generation information #n, steps S33 and S34 are skipped and the process is ended.

In this case, because the generation of the encrypted master key C stored in the encrypted data memory 3 is older than the generation n indicated by the prerecorded generation information #n, recording of data onto the recording medium 21 is not allowed (cannot be performed).

On the other hand, if it is determined in step S32 that the generation of the encrypted master key C stored in the encrypted data memory 3 is equal to or later than the generation n indicated by the prerecorded generation information #n, that is, if it is determined that the generation of the encrypted master key C stored in the encrypted data memory 3 is not older than the generation n indicated by the prerecorded generation information #n, then the process goes to step S33. In step S33, the CPU 37 employs the generation information indicating the generation of the encrypted master key C stored in the encrypted data memory 3 as the generation-when-encrypted information and records it on the recording medium 21 (Fig. 8) via the recording medium interface 39.

If a content to be recorded on the recording medium 21 is input to the recording/reproducing apparatus, then, in step S34, the content is encrypted by the encrypting/decrypting LSI 36 and supplied to the recording medium interface 39 via the bus 31.

More specifically, when a digital signal representing a content to be recorded on the recording medium 21 is supplied to the digital interface 32, the digital interface 32 transfers the received digital signal to the encoder 41 of the encrypting/decrypting LSI 36 (Fig. 7) via the bus 31. In the case where an analog signal representing a content to be recorded on the recording medium 21 is supplied to the analog interface 35, the analog signal is converted by the converter 34 into a digital signal and supplied to the MPEG codec 33. The MPEG codec 33 MPEG-encodes the digital signal received from the converter 33 and supplies the resultant signal to the encoder 41 of the encrypting/decrypting LSI 36 via the bus 31.

In the encrypting/decrypting LSI 36, the master key decoder 4 decodes the encrypted master key C stored in the encrypted data memory 3 into a master key MK in accordance with the device key DK stored in the device key memory 2. The resultant master key MK is supplied to the encoder 41. Using the master key MK supplied from the master key decoder 4, the encoder 41 encrypts the digital signal representing the content supplied to the encoder 41. The obtained encrypted content is supplied to the recording medium interface 39 via the bus 31.

Furthermore, in step S34, the recording medium interface 39 transfers the encrypted content received from the encrypting/decrypting LSI 36 to the recording medium 21 so as to record it thereon. Then, the process is ended.

In the case where a disk-shaped recording medium such as an optical disk is employed as the recording medium 21, generation-when-encrypted information is recorded, for example, in a sector header of a sector, as shown in Fig. 11. More specifically, each sector includes a sector header and a user data area, and the generation-when-encrypted information is recorded in a sector header of a sector corresponding to a user data area in which the encrypted content encrypted using the master key MK of the generation indicated by the generation-when-encrypted information is recorded. The details of the method of recording generation information are disclosed in Japanese Patent Application No. 10-352975 filed by the applicant for the present invention.

In the case where the encrypted content is recorded in the form of a file on the recording medium 21, the generation-when-encrypted information may be recorded, on the recording medium 21, in a form which allows the generation-when-encrypted information to be managed in relation to the file.

In the embodiment described above, a content is encrypted using a master key of a particular generation stored in the encrypted data memory 3 and then the encrypted content is recorded. Alternatively, a master key of a generation indicated by prerecorded generation information recorded on the recording medium 21 may be produced from a master key of a particular generation stored in the encrypted data memory 3, and a content may be encrypted using the produced master key and the encrypted content may be recorded. In this case, the generation of the master key used to encrypt the content recorded on the recording medium 21 is always equal to the generation indicated by the prerecorded generation information recorded on the recording medium 21. Therefore, in this case, it is not required to record the generation-when-encrypted information on the recording medium 21.

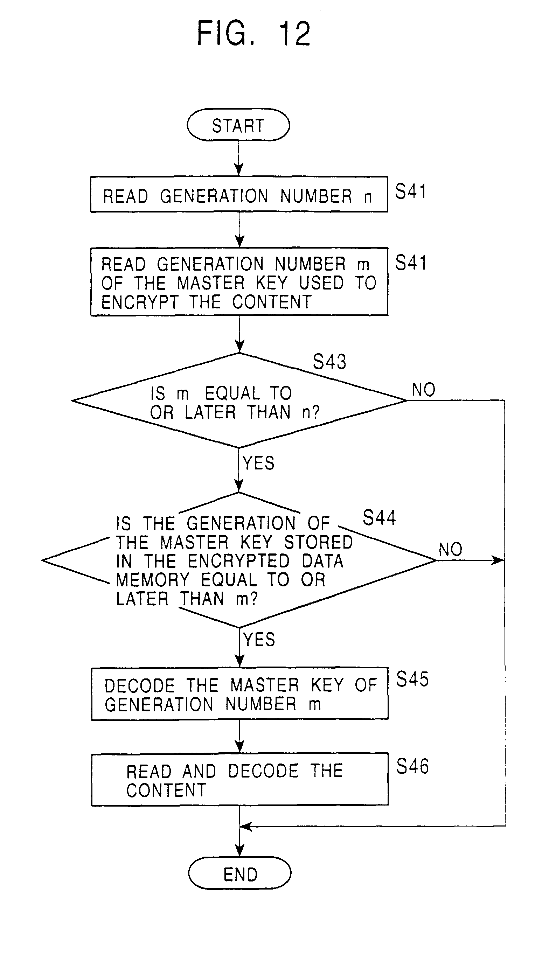

Referring now to the flow chart shown in Fig. 12, an operation performed by the recording/reproducing apparatus to reproduce data from the recording medium 21 is described below.

First, in step S41, the recording medium interface 39 reads prerecorded generation information #n from the recording medium 21 and supplies it to the CPU 37. In the next step S42, the recording medium interface 39 further reads, from the recording medium, information (generation-when-encrypted information) representing the generation of a master key MK used to encrypt a content (data) to be reproduced. The obtained information is also supplied to the CPU 37.

In step S43, the CPU 37 compares the generation n indicated by the prerecorded generation information #n with the generation m indicated by the generation-when-encrypted information to examine coincidence/difference in generation.

If it is determined in step S43 that the generation m indicated by the generation-when-encrypted information is neither equal to nor later than the generation n indicated by the prerecorded generation information #n, that is, if the generation m indicated by the generation-when-encrypted information is older than the generation n indicated by the prerecorded generation information #n, then steps S44 to S46 are skipped and the process is ended.

Thus, in the case where the content recorded on the recording medium is determined to be a content encrypted using a master key MK of a generation older than the generation n indicated by the prerecorded generation information #n, the content is not reproduced (reproducing of the content is not allowed).

That is, in this case, the content is regarded as a content encrypted and recorded using an old-generation master key by a recording apparatus which has been designated as a fraudulent apparatus and thus which can no longer obtain a newest-generation master key. Data recorded on a recording medium 21 using such a fraudulent apparatus is prevented from being reproduced thereby precluding use of such a fraudulent recording apparatus.

On the other hand, if it is determined in step S43 that the generation m indicated by the generation-when-encrypted information is equal to or later than the generation n indicated by the prerecorded generation information #n, that is, if the generation m indicated by the generation-when-encrypted information is equal to or newer than the generation n indicated by the prerecorded generation information #n and thus the content recorded on the recording medium 21 is a content encrypted using a master key MK of a generation equal to or later than the generation n indicated by the prerecorded generation information #n, then the process goes to step S44. In step S44, the CPU examines the generation of the encrypted master key C stored in the encrypted data memory 3 of the encrypting/decrypting LSI (Fig. 7) and compares the generation n indicated by the prerecorded generation information #n with the generation m indicated by the generation-when-encrypted information to determine consistence/difference in generation.

If it is determined in step S44 that the generation of the encrypted master key C stored in the encrypted data memory 3 is neither equal to nor later than the generation m indicated by the generation-when-encrypted information, that is, if the generation of the encrypted master key C stored in the encrypted data memory 3 is older than the generation m indicated by the generation-when-encrypted information, steps S45 and S46 are skipped and the process is ended.

Thus, also in the case where the generation of the encrypted master key C stored in the encrypted data memory 3 is older than the generation m indicated by the generation-when-encrypted information, reproducing of data from the recording medium 21 is not allowed. That is, when the generation of the encrypted master key C is older than the generation m indicated by the generation-when-encrypted information, it is not impossible to generate, from the master key MK obtained from the encrypted master key C, a master key MK of the generation m which is newer than the generation of the master key MK obtained from the encrypted master key C. Thus, in this case, reproducing of data from the recording medium 21 is not performed (cannot be performed).

Therefore, a recording/reproducing apparatus having only a master key of a generation older than the generation m indicated by the generation-when-encrypted information recorded on the recording medium 21 cannot reproduce data from the recording medium 21 even if the recording/reproducing apparatus is an authorized one. For example, when a key table associated with an ith-generation master key MKᵢ and prerecorded generation information indicating the ith generation are recorded on a recording medium 21, if a content encrypted using a mater key MKᵢ₊₁ of a (i+1)th generation is recorded on the recording medium 21, a recording/reproducing apparatus having only a master key of a generation equal to or older than the ith generation cannot reproduce the content encrypted using the mater key MKᵢ₊₁ of the (i+1)th generation from the recording medium 21 even if the recording/reproducing apparatus is an authorized one.

However, the above problem can be avoided if a content is recorded on the recording medium 21 after encrypting the content using a master key of the generation indicated by the prerecorded generation information recorded on the recording medium 21 and then recorded on the recording medium 21.

That is, in the present embodiment, because it is ensured that the master key of the generation indicated by the prerecorded generation information is registered in the key table on the recording medium 21, any authorized recording/reproducing apparatus can acquire a master key of the generation indicated by the prerecorded generation information from the key table recorded on the recording medium 21. Therefore, any authorized recording/reproducing apparatus can reproduce from the recording medium 21 any content encrypted using the master key of the generation indicated by the prerecorded generation information recorded on the recording medium 21.

On the other hand, if it is determined in step S44 that the generation of the encrypted master key C stored in the encrypted data memory 3 is equal to or later than the generation m indicated by the generation-when-encrypted information, that is, if the generation of the encrypted master key C stored in the encrypted data memory 3 is equal to or newer than the generation m indicated by the generation-when-encrypted information, then the process goes to step S45. In step S45, the master key decoder 4 in the encrypting/decrypting LSI 36 (Fig. 7) decodes the encrypted master key C stored in the encrypted data memory 3 into a master key MK in accordance with the device key DK stored in the device key memory 2. If the generation of the decoded master key MK is newer than the generation m indicated by the generation-when-encrypted information, the master key decoder 4 produces a master key MK of the generation m indicated by the generation-when-encrypted information from the decoded master key MK and supplies the resultant master key MK to the decoder 42.

Then in the next step S46, the recording medium interface 39 reads an encrypted content from the recording medium 21 and supplies it to the encrypting/decrypting LSI 36 via the bus 31. Furthermore, in step S46, the decoder 42 in the encrypting/decrypting LSI 36 decodes the encrypted content read from the recording medium 21 in accordance with the master key MK obtained in step S45. Thus, the process is completed.

The content decoded in the above-described manner is then output to the outside via the bus 31 and the digital interface 32, or the content is further MPEG-decoded by the MPEG codec 33 and converted by the converter 34 into an analog signal and then output to the outside via the analog interface 35.

As described above, because reproducing of data is prohibited when the generation indicated by the generation-when-encrypted information is not equal to or later than the generation indicated by the prerecorded generation information, all users have to perform updating of master keys. This indirectly precludes distribution of a recording medium recorded by a fraudulent apparatus.

A key table in which a master key is registered and prerecorded generation information may also be acquired via a recording medium such as an IC (integrated Circuit) card other than a recording medium 21 used by a recording/reproducing apparatus to record or reproduce data, or via a network. However, when an IC card is employed, the IC card is additionally required and thus hardware cost increases. In the case, a master key is acquired via a network, a modem and a TA (Terminal Adapter) for communication are additionally required, and thus hardware cost also increases. In contrast, in the case where a key table and prerecorded generation information are recorded on a recording medium 21 used by a recording/reproducing apparatus to record or reproduce data, no additional hardware is required and an increase in apparatus cost can be prevented.

The processes described above may be performed by either hardware or software. When the processes are performed by software, a software program is installed on a general-purpose computer or the like.

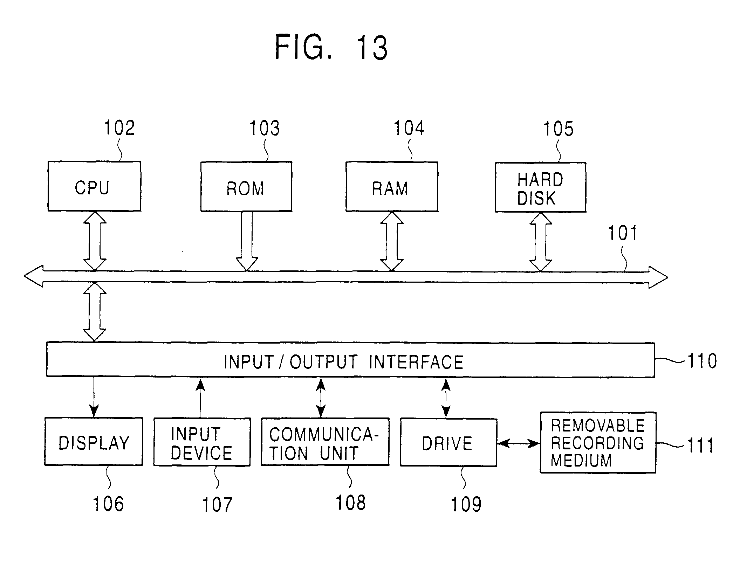

Fig. 13 illustrates an embodiment of the invention in which a program used to execute the processes described above is installed on a computer.

The program may be stored, in advance, on a hard disk 105 serving as a storage medium or in a ROM 103 which are disposed inside the computer.

Alternatively, the program may be temporarily or permanently stored (recorded) on a removable recording medium 111 such as a floppy disk, a CD-ROM (Compact Disk Read Only Memory), an MO (Magneto Optical) disk, a DVD (Digital Versatile Disk), a magnetic disk, or a semiconductor memory. Such a removable recording medium 111 may be provided in the form of so-called package software.

Instead of installing the program from the removable recording medium 111 onto the computer, the program may also be transferred to the computer from a download site via a digital broadcasting satellite by means of radio transmission or via a network such as a LAN (Local Area Network) or the Internet by means of wire communication. In this case, the computer receives, using a communication unit 108, the program transmitted in such a manner and installed the program on the hard disk 105 disposed in the computer.

In the present embodiment, it is not necessarily required that a process be described in a program executed by the computer in such a manner that steps of the process are performed in a time sequential fashion in the order described in a flow chart, but steps of the process may be performed in a parallel fashion (parallel processing or object processing).

Furthermore, the program may be executed either by a single computer or by a plurality of computers by means of distributed processing. The program may also be transferred to a computer at a remote location and executed by that computer.

The computer includes a CPU (Central Processing Unit) 102. The CPU 102 is connected to an input/output interface 110 via a bus 101. When a user inputs a command by operating an input device 107 such as a keyboard or a mouse, the command is transferred to the CPU 102 via the input/output interface 110. In accordance with the command, the CPU 102 executes a program stored in the ROM (Read Only Memory) 103. Alternatively, the CPU 102 may execute a program loaded in a RAM (Random Access Memory) 104 wherein the program may be loaded into the RAM 104 by transferring a program stored on the hard disk 105 into the RAM 104, or transferring a program which has been installed on the hard disk 105 after being received from a satellite or a network via the communication unit 108, or transferring a program which has been installed on the hard disk 105 after being read from a removable recording medium 11 loaded on a drive 109. By executing the program, the CPU 102 performs the process described above with reference to the flow charts. The CPU 102 outputs the result of the process, as required, to an output device such as an LCD (Liquid Crystal Display) or a loudspeaker via an input/output interface 110. The result of the process may also be transmitted via the communication unit 108 or may be stored on the hard disk 105.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing apparatus comprising:
acquisition means for acquiring a first key from the outside, said first key being capable of producing a first key of a generation -older than the generation of said first key acquired from the outside; and
updating means for updating the content of first key storage means storing said first key with said first key acquired via said acquisition means.

2. An information processing apparatus according to Claim 1, wherein if the generation of said first key acquired via said acquisition means is later than the generation of said first key stored in said first key storage means, said updating means updates the content of said first key storage means.

3. An information processing apparatus according to Claim 1, wherein said updating means replaces the first key stored in said first key storage means with the first key acquired via said acquisition means.

4. An information processing apparatus according to Claim 1, further comprising said first key storage means.

5. An information processing apparatus according to Claim 1, wherein said first key storage means stores a first encrypted key obtained by encrypting said first key in accordance to a second key,
and wherein said information processing apparatus further comprises decoding means for decoding said first encrypted key in accordance with said second key.

6. An information processing apparatus according to Claim 5, further comprising second key storage means for storing said second key.

7. An information processing apparatus according to Claim 1, further comprising production means for producing, from the first key stored in the first key storage means, a first key of a generation older than the generation of said first key stored in the first key storage means.

8. An information processing apparatus according to Claim 7, wherein said production means produces a first key of a generation older than the generation of said first key stored in said first key storage means by applying a predetermined function to said first key stored in said first key storage means.

9. An information processing apparatus according to Claim 1, wherein said acquisition means reads said first key from a recording medium on which said first key is recorded.

10. An information processing apparatus according to Claim 9, wherein a plurality of said first keys are recorded on said recording medium,
and wherein said acquisition means reads a particular first key of said plurality of first keys, said particular first key being assigned to said information processing. apparatus.

11. An information processing apparatus according to Claim 1, further comprising encryption means for encrypting data in accordance with the first key stored in said first key storage means.

12. An information processing apparatus according to Claim 1, further comprising:
comparison means for comparing the generation of the first key stored in said first key storage means with a particular generation of a first key, said particular generation being indicated by generation information recorded on a recording medium; and
recording control means for controlling recording of data onto said recording medium in accordance with a comparison result given by said comparison means.

13. An information processing apparatus according to Claim 12, wherein, only when the generation of the first key stored in said first key storage means is equal to or later than the generation indicated by the generation information recorded on said recording medium, said recording control means allows data to be recorded on said recording medium.

14. An information processing apparatus according to Claim 12, further comprising encryption means for encrypting data in accordance with the first key stored in said first key storage means and outputting the resultant encrypted data,
wherein said recording control means records said encrypted data onto said recording medium.

15. An information processing apparatus according to Claim 14, wherein said recording control means also records, onto said recording medium, the generation information indicating the generation of the first key used by said encryption means to encrypt the data.

16. An information processing apparatus according to Claim 1, further comprising decoding means for decoding encrypted data in accordance with the first key stored in said first key storage means.

17. An information processing apparatus according to Claim 1, further comprising:
comparison means for comparing the generation of the first key stored in said first key storage means with a particular generation of a first key, said particular generation being indicated by generation information recorded on a recording medium; and
reproducing control means for controlling reproducing of data from said recording medium, in accordance with a comparison result given by said comparison means.

18. An information processing apparatus according to Claim 17, wherein only when the generation of the first key stored in said first key storage means is equal to or later than the generation indicated by the generation information recorded on said recording medium, said reproducing control means allows data to be reproduced from said recording medium.

19. An information processing apparatus according to Claim 17, wherein encrypted data is recorded on said recording medium,
and wherein said information processing apparatus further comprises decoding means for decoding said encrypted data in accordance with the first key stored in said first key storage means.

20. An information processing apparatus according to Claim 1, further comprising:
first comparison means for comparing the generation of the first key stored in said first key storage means with a generation indicated by first generation information stored on a recording medium on which encrypted data obtained by encrypting data according to a first key and the first generation information indicating the generation of the first key used to encrypt said data are recorded;
reproducing control means for controlling reproducing of encrypted data from said recording medium, in accordance with a comparison result given by said first comparison means; and
decoding means for decoding said encrypted data in accordance with the first key stored in said first key storage means.

21. An information processing apparatus according to Claim 20, wherein only when the generation of the first key stored in said first key storage means is equal to or later than the generation indicated by the first generation information recorded on said recording medium, said reproducing control means allows data to be reproduced from said recording medium.

22. An information processing apparatus according to Claim 20, wherein second generation information indicating the generation of a particular first key has been recorded, in advance, on said recording medium,
said information processing apparatus further comprising second comparison means for comparing the generation indicated by the second generation information recorded on said recording medium with the generation of the first key stored in said first key storage means,
and wherein said reproducing control means controls reproducing of said encrypted data from said recording medium, in accordance with comparison results given by said first and second comparison means.

23. An information processing apparatus according to Claim 20, further comprising production means for producing a first key in such a manner that, when the generation of the first key stored in said first key storage means is later than a generation indicated by first generation information stored on said recording medium, said production means produces a first key of the generation indicated by said first generation information from the first key stored in said first key storage means,
wherein said decoding means decodes said encrypted data in accordance with the first key produced by said production means.

24. An information processing apparatus according to Claim 1, further comprising:
production means for producing, from the first key stored in said first key storage means, a first key of a particular generation indicated by generation information recorded on a recording medium;
encrypting means for encrypting data in accordance with the first key produced by said production means and outputting the resultant encrypted data; and
recording control means for recording said encrypted data onto said recording medium.

25. An information processing apparatus according to Claim 1, further comprising:
production means for producing, from the first key stored in said first key storage means, a first key of a particular generation indicated by generation information recorded on a recording medium;
reproducing control means for reproducing data recorded on said recording medium; and
decoding means for decoding the data reproduced from said recording medium, in accordance with the first key produced by said production means.

26. An information processing method comprising the steps of:
acquiring a key from the outside, said key being capable of producing a key of a generation older than the generation of said key acquired from the outside; and
updating the content of key storage means storing said key with said key acquired via said acquisition means.

27. A recording means storing a program executed by a computer to perform a process, said process comprising the steps of:
acquiring a key from the outside, said key being capable of producing a key of a generation older than the generation of said key acquired from the outside; and
updating the content of key storage means storing said key with said key acquired via said acquisition means.

28. A recording medium on which encrypted data obtained by encrypting data according to a first key is recorded, said recording medium being characterized in that:
generation information is recorded on said recording medium, said generation information indicating the generation of a first key capable of producing a first key of a generation older than the generation indicated by said generation information.

29. A recording medium according to Claim 28, wherein said generation information is recorded in a read-only area.

30. A recording medium according to Claim 28, wherein said first key and generation information indicating the generation of said first key are recorded on said recording medium.

31. A recording medium according to Claim 30, wherein said first key is encrypted in accordance with a second key.

32. A recording medium according to Claim 30, wherein said first key is recorded in a read-only area.

33. A recording medium according to Claim 28, wherein a plurality of first keys and generation information indicating the generations of said plurality of first keys are recorded on said recording medium.
